# EUROPEAN PATENT APPLICATION

(11) **EP 1 355 255 A2**
(43) Date of publication of application: **22.10.2003**
(21) Application number: 03396033.7
(22) Date of filing: 14.04.2003
(51) Int. Cl.: G06F 17/60

(54) **Device independent network service**

(30) Priority: 17.04.2002 FI 20020734
(71) Applicant: Sonera Oyj, 00510 Helsinki (FI)
(72) Inventor: Yli-Korhonen, Jukka, 90120 Oulu (FI); Pyörälä, Marko, 90800 Oulu (FI); Niskanen, Saku, 90570 Oulu (FI)
(74) Representative: Pursiainen, Timo Pekka

(57) **Abstract**

The invention relates to a method and a system for collecting consumer feedback from a previously undetermined consumer group by using different data communication applications and different terminals. According to the invention, at least two independent feedback channels (VN) are arranged in order to collect feedback. As the feedback channel (VN) can be used a telephone network, a short message service of a mobile station, a feedback channel of a digital television connection, a WAP connection, or an Internet connection

## Description

The invention relates to a method for arranging a device independent network service according to the preamble of the appended claim 1. In addition, the invention relates to a system implementing the method according to the preamble of the appended claim 8, as well as a collector unit used in the system according to the preamble of the appended claim 13.

The feedback and opinions received from consumers is utilized in developing consumer services. In order to gather information, different consumer surveys have been conducted with many methods. For example, with the help of data networks it is possible to gather opinions and feedback on different issues from the consumers. A typical way for getting feedback is to state a question and the possible response choices and response methods through media, such as, for example, television or newspapers. In a conventional solution, the feedback can be given in one way only and in a set form, such as, for example, with a voice message on a telephone, because controlling the data and feedback channels is typically arranged in a terminal specific or feedback channel specific manner, in which case there are specific methods and systems for each type of terminal or feedback channel for processing the feedback information.

Patent publication WO 0153922 presents a method for collecting opinions in real time from consumers, in which method the consumer can give feedback via different terminals, which are connected to a computer network, preferably the Internet. The terminal used in giving feedback can be selected regardless of the manner the evaluated information is transferred to the consumer. The method is intended especially for the purpose of real time consumer evaluation of television programs and the like, which consumers are pre-selected to the evaluation team in question. The method is also characterized in that the system used for collecting and analysing the opinions processes only one case to be evaluated at a time, and when several cases are evaluated simultaneously, a separate system is required for each case.

The primary aim of the present invention is to introduce a method, with which it is possible to collect feedback from a previously undefined group of consumers with different data transfer methods and equipment.

To attain this purpose, the method according to the invention is primarily characterized in what will be presented in the characterizing part of the independent claim 1.

The invention further relates to a system to be applied in the method. The system according to the invention is primarily characterized in what will be presented in the characterizing part of the independent claim 8. The collector unit used in the system is, in turn, primarily characterized in what will be presented in the characterizing part of claim 13.

The other, dependent claims will present some preferred embodiments of the invention.

The basic idea of the invention is to implement collecting feedback from several previously undefined consumers simultaneously in different data communication networks, which data communication network and terminal the consumer himself can select. The administration of collecting data according to the invention can be performed centrally.

A previously undefined consumer here refers to a consumer, who is not necessarily selected to any specific evaluation team, but said consumer gives feedback spontaneously after receiving information on the possibility to give feedback through some media. The message informing about said possibility to give feedback states the feedback channels to be used, out of which the consumer selects the suitable alternative, for the usage of which he has the appropriate terminal, such as, for example, a telephone, a mobile phone, a computer, or a digital television set.

The system implementing the method is implemented advantageously, for example, of three functional blocks, which can be placed in one uniform or several separate device environments. Also, the administration of different blocks is possible to decentralize to several different places, if necessary. Hereinbelow the blocks are referred to as a determination unit, a manager unit and a collector unit.

In the determination unit is determined the data, which is characteristic to the survey being conducted and which can be survey-specifically changed, if necessary, such data as, for example, the issues feedback is desired to be collected on; how often the development of the results is to be reported on; and which alternative data transfer channels are provided for giving feedback.

The control unit forms, on the basis of data input to the determination unit, the required parameters and identifier data for the feedback survey in question, which said identifier data determines, among other things, individually the survey and the data collected from it. After this, the control unit activates, on the basis of the feedback channels being used, the suitable collector units and the feedback channels of the collector units, and transfers the parameters to the activated collector units.

The collector unit receives the messages sent by the consumers arriving at the feedback channel, which messages are advantageously opened and analysed, in which case it is cleared, which feedback survey the message belongs to and what information the message contains. After this, the messages belonging to different feedback surveys can be combined into one packet, in which case there are savings in data transfer capacity when transferring data forward. From the collector unit the data (or packets) are transferred to the manager unit either instantaneously or typically at an appropriate time, because, when necessary, the data can also be stored in the collector unit to wait to be transferred to the manager unit, which takes place later.

The manager unit receives the feedback data transferred from the collector unit, or typically from several collector units, and preferably data pre-processed in the collector unit. The data from different collector units is sorted and collected together case-specifically by means of previously created parameters and identifier data. The collected data is provided to the determination unit either in real time, at previously set time limits, or separately by request. From the determination unit, it is possible to follow the development of the feedback, and the same data, or data adapted from it, can be transferred in a suitable data transfer manner to the consumers as well.

With the feedback collecting method according to the invention, many advantages in comparison to known solutions can be reached, one significant advantage of which is that several different feedback channels can be used simultaneously in collecting feedback. In addition, it is possible to manage several simultaneous votings with the same system. Some advantageous embodiments of the invention make it possible to also distribute the system, which makes it possible to separately administer different parts of the system and to increase the capacity by adding required units to the system. The method according to the invention makes it possible to have different and wide feedback collecting means administered from one point, such as, for example, votings and polls.

In the following, the invention will be described in more detail with reference to the appended principle drawings, in which
- Fig. 1: shows an embodiment of the feedback collecting system,
- Fig. 2: shows the structure of a collector unit, and
- Fig. 3: shows data transfer between different parts of the embodiment in Fig. 1.

The following abbreviations of the system parts in the figures are used hereinbelow:
- the determination unit, in the figures Voting Provider, abbreviation VP,
- the manager unit, in the figures Voting Manager, abbreviation VM,
- the collector unit, in the figures Voting Collector, abbreviation VC,
- the feedback channel, in the figures Network, abbreviation VN,
- the distribution channel, in the figures Distribution Channel, abbreviation DC, and
- the consumer, in the figures Voter, abbreviation V.

In the determination unit VP, the data, which is characteristic to the feedback survey in question, hereinbelow act, such as, for example, polls or votings, and which is changeable, is determined. This type of data includes, for example, the issues feedback is desired on in the act in question, how often the developments in the results are reported on, and which alternative data transfer networks are offered for giving feedback. Issues that feedback is desired on can be, for example, in a simple poll, the selection data of a yes/no -alternative or the identifier of the candidate that is being supported in the voting. Other type of feedback data can naturally be determined as well. In the determination unit, it is possible to determine also other data connected to the feedback survey besides the data mentioned above, such as, for example, invoicing data.

As reporting manner it is possible to determine the manner that best serves the demand; for example, it is possible to report on the development of the situation continuously, periodically, or only after the survey has ended. Also, the data to be reported can be freely determined within the invention, in which case it is possible to receive, in addition to the answers given to the actual questions, other information as well, such as, for example, how the feedback is distributed between different feedback channels.

In the determination unit VP is also determined the manner, in which the reporting is performed, and in some applications it is advantageous to report in such a manner that the consumers can follow the development of the results. In an advantageous embodiment of the invention it is possible to create several reporting profiles, in which case it is possible to determine specific issues to be reported for specific user groups.

The channels used for reporting and the feedback channels used for giving feedback are determined in the determination unit VP. Typically, the selected channels are affected by the sought target group and by the services and terminals in use in the target area. Mass media, such as television, radio, the press, or the Internet, is typically used for reporting. The typical feedback channels include, among others, different phone connections and Internet connections, but also different digital television applications and mobile phone applications are possible.

Through the determination unit VP the system is also given the information on when the collection of feedback is started and when it is stopped.

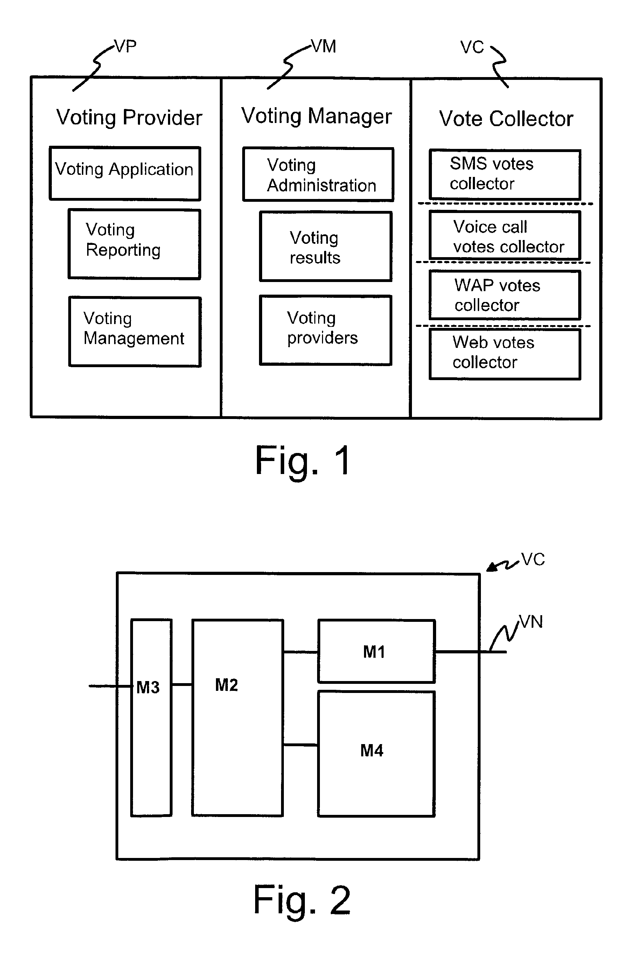

In the manager unit, case-specific parameters for the act in question are formed on the basis of the data input to the determination unit VP, which parameters are used to manage the data processing. The manager unit VM forms an individual identifier data for each act and individual identifier data for the data collected of the act. The identifier data formed in the manager unit VM is transferred from the manager units to the activated collector units VC. Figure 1 illustrates, inside the collector unit VC, alternative collector units to be connected to different feedback channels VN. The manager unit activates, at a set time, those collector units VC, which are necessary to be activated on the basis of the feedback channel data VN of the determination unit VP. In the manager unit VM, an individual identifier data is configured for each collector unit VC, by means of which data the collector units are controlled and which identifier data also makes it possible to analyse the feedback on the basis of the characteristics connected to the collector unit and feedback channels VN.

Typical feedback channels VN include a telephone network, a short message service (SMS), and an Internet connection. In the future, the use of different type of services of different mobile stations will increase in collecting feedback, such as, for example, WAP (Wireless Application Protocol). Also, digital television broadcasting and the terminals used in receiving it makes it possible, in the future, for the consumer V to give feedback in an alternative manner. As a terminal the consumer V can thus use any suitable device, such as, for example, different telephones, mobile stations, computers, multimedia terminals, and televisions.

With the selected terminal the consumer V sends a message, which is, by its form, characteristic to the selected feedback channel and predetermined. The form of the message used is notified to the consumer V, if necessary, advantageously in the same way as the information on the act and the feedback channels available for use in it. It is also possible in some embodiment to edit the substantially free form feedback from the consumer V in the terminal to a specified form, for example, by means of a suitable compiler. The message formed at the terminal is transferred via a selected feedback channel VN to the collector unit VC. In the system, there is a collector unit VC for each separate feedback channel VN.

Figure 2 shows an advantageous embodiment of the collector unit VC. The collector unit VC includes a reception module M1 for connecting to one feedback channel VN. As the feedback channel VN it is possible to use several different digital and analogue channels, and the editing of the received signal, if necessary, is performed advantageously in the reception module M1. From the reception module M1 the edited and thus specified form message is transferred to the processing module M2 of the collector unit VC, in which the message is advantageously opened and identified, in which case it is determined if the message belongs to an active act, in other cases the message is advantageously saved in a temporary memory M4. After this, the active messages are transferred to a data transfer module M3, which advantageously combines the messages into one packet. The message and packet can, if necessary, be stored in the data transfer module M3. The collector unit VC transfers its data to the manager unit VM in a set manner, either continuously or at set intervals, or when a set amount of data is received, or when the manager unit specifically requests it.

Saving, in an advantageous embodiment, the messages that do not belong to the active act in a temporary memory M4 makes it possible that, among other things, if the transfer of the data of the act to the collector unit VC is delayed, for example, because of a break in the network connections between the collector unit and the manager unit VM, it is possible to take the received feedback into account afterwards. Because of this, it is advantageous to check the contents of the temporary memory M4 every time a new act is determined for the collector unit VC. For the temporary memory M4, it is advantageous to determine such a time for storage that covers at least the typical network break times. On the other hand, with a shorter data storage time less memory is required and the processing of the contents of the memory is faster in the collector unit VC than in a solution that makes it possible to have a long storage time.

It is advantageous to combine and normalize messages in an act-specific manner in the collector unit VC, in which case the data processing capacity required in the manager unit VM is considerably smaller than when data from each feedback message is transferred to the manager unit individually. The data is transferred from the collector unit VC to the manager unit VM in a specified form, in which case by means of identifier data the collector unit that received the message, the act, and the information connected to the act can be determined from the message. In an advantageous embodiment of the collector unit VC according to the invention, data can be stored, if necessary, also in said collector unit to wait to be transferred to the manager unit VM. Thus, between the collector unit VC and the manager unit VM there does not need to be a continuous data transfer connection. Data transfer from the collector unit VC to the manager unit VM can be controlled from either unit, but it is advantageous to control the data transfer from the manager unit, in which case the data transfer of parallel collector units between the manager units can be implemented efficiently.

In the manager unit VM, the feedback data transferred from the collector unit VC or typically from several collector units is received. In the manager unit VM the data from different collector units VC is collected together act by act by means of the previously formed identifier data and parameters. The collected data is provided from the manager unit VM to the determination unit VP in real time, or at previously set time limits or separately by request from the determination unit. From the determination unit VP, it is possible to follow the development of the feedback, and the same data, or data adapted from it, can be transferred in a suitable data transfer manner to the consumers V as well.

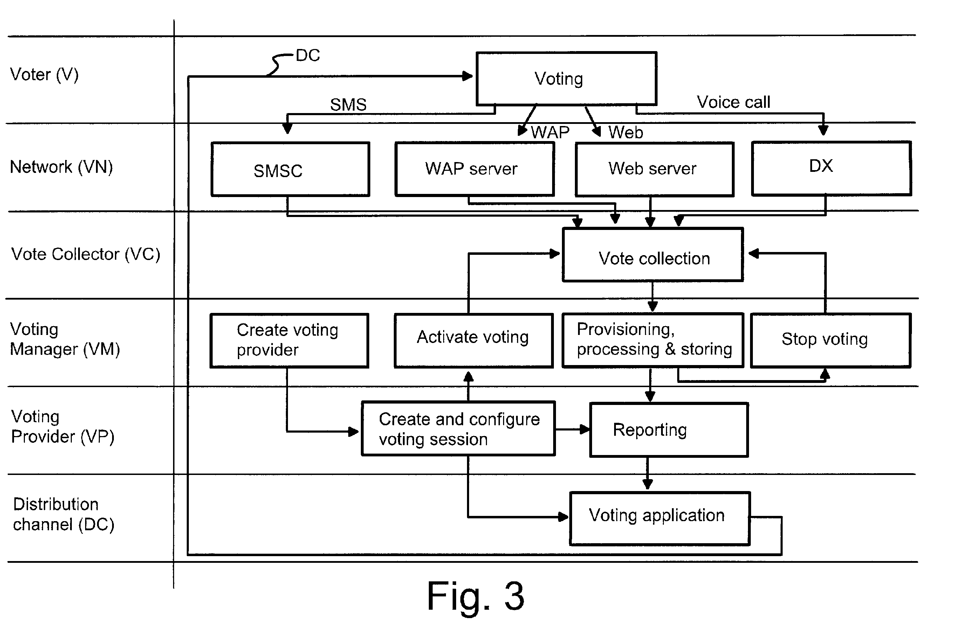

Next, we present as an example a manner the method according to the invention can be used to implement a voting according to figure 3.

In the determination unit VP the feedback channels VN to be used in the voting are determined, which channels in the example case are a short message (SMS), a phone call (voice call), a WAP-application, and an Internet connection (WEB). The alternatives to be voted on are determined in the determination unit VP, as well as how often the development of the voting result is reported on, and when the voting time begins and ends. From the determination unit VP it is, if desired, possible to send information on the voting via a selected data distribution channel or channels DC, such as via the Internet and television in the example. In the determination unit, it is possible to determine also other data connected to the voting besides the data mentioned above, such as, for example, invoicing data.

In the determination unit VP, an identifier data for the voting is created on the basis of given information, which data portrays the act (in the figure marked with the text 'create and configure session'), as well as their an identifier data identifying the candidate is formed for each candidate.

In the manager unit VM and identifier is saved for each service provider, i.e. determination unit VP (create voting provider), and at the same time a right of access is created for said determination unit to said manager unit.

The manager unit VM activates (activate voting) at a desired time those collector units VC, wherein there are such feedback channels VN that correspond to the feedback channels determined in the beginning. In the example, each of the four feedback channels VN is placed in their own collector unit VC, but the same type of feedback channels VN can also be located in more than one collector unit VC, in which case the manager unit activates all those collector units, wherein there is a specific type of a feedback channel.

The collector units VC receive messages, which include at least information on which voting the message is connected to and which candidate is voted for. The sender data can belong to the message sent by the consumer V or the sender data can be identified and collected for further use from the frame of the message.

From the collector unit VC the results are transferred to the manager unit VM, and the data comprises, in the example case, at least the identifier data of the voting, the identifier data of the candidate, and the identifier data of the feedback channel VN.

The manager unit VM collects the results coming from different collector units VC (thus, in the example, only one collector unit per one feedback unit) and sums up the results of the voting in question (provisioning, processing & storing) and reports at set times to the determination unit VP on the development of the voting results (reporting). Also, other type of analysing can be performed on the results, such as establishing how the voting rate is distributed between different feedback channels VN. In addition, the manager unit VM can perform other determined procedures connected to the voting or a voter, such as, for example, invoicing or identification.

Through the determination unit VP it is possible to monitor the development of the voting on the basis of reporting, which can happen in real time, at predetermined intervals, or separately by request. The development of the voting results can be transmitted also to the consumer V by using the desired channels DC. The typical channels are, among others, television, the Internet and short messages (such as, for example, the so-called group text messages).

When the voting time or some other termination condition is realized, the manager unit VM gives the collector unit VC a stop order (stop voting), after which the messages coming to the feedback channels are not taken into account in the voting, but the votes are saved advantageously in the temporary memory of the collector unit.

The feedback system according to the invention can be applied, in addition to different votings and elections, among others, in money collection campaigns, polls, and chat-applications. The functional units of the feedback system, such as the collector unit VC, manager unit VM, and the determination unit VP can be managed by one or more separate and independent parties, such as companies. Thus, it is possible to form an assembly suitable for a survey by collecting the desired services from such parties (or also possibly from only one party), which offer competence suitable for the purpose. Competence areas of different parties can be formed, among others, on different sub-areas of technology and special fields aimed at consumer groups, such as sub-areas connected to, for example, cultural, geographical, or consumer behaviour. Competence areas of technology managed by different parties can be, for example, in different computer applications and editing information. Also, the networks can be controlled by different parties, such as, for example, mobile phone networks managed by different operators. By combining the services offered by different parties together, it is possible to form a suitable feedback channel system VN for the desired target group and an adequate data processing capacity for processing the feedback data.

It is also possible to continue the procedures performed by different units of the feedback system described above to other units by preserving the basic idea of the invention. For example, the analysing of the data can be centralized entirely in the manger unit VM, in which case the collector unit VC only edits the messages coming to the feedback channel VC into a desired form and transmits the edited message to the manager unit to be analysed. On the other hand, it is possible to perform in the collector unit VC, if necessary, also other tasks than the ones presented in the example, such as, for example, identifying the voter, locating the voter, validating the voter, and invoicing.

Naturally, it will be obvious that the invention is not limited solely to the embodiment presented in the above example, but, for example, as the feedback channels VN it is possible to use also other data transfer networks than the solutions presented in the example, as well as several different terminals can be used as the terminals connected to the data transfer networks.

## Claims

1. A method for collecting consumer feedback from a previously undetermined consumer group by using different data communication applications and different terminals, **characterized in that** for collecting the feedback are arranged at least two feedback channels (VN), which are independent from each other.

2. The method according to claim 1, **characterized in that** the feedback channels (VN) are arranged to function substantially simultaneously.

3. The method according to claim 1 or 2, **characterized in that** the feedback channel (VN) is independent of that data distribution channel (DC) that is used in reporting on the collection.

4. The method according to any of the preceding claims 1 to 3, **characterized in that** as the feedback channel (VN) is used a telephone network, a short message service of a mobile station, a feedback channel of a digital television connection, a WAP connection, or an Internet connection.

5. The method according to claim 1, **characterized in that** feedback is collected on one issue.

6. The method according to claim 1, **characterized in that** feedback is collected simultaneously on two or more substantially independent issues.

7. The method according to claim 1 or 5 or 6, **characterized in that** the issue the feedback is collected on is at least one of the following: a voting, a collection, a poll.

8. A system for collecting consumer feedback from a previously undetermined consumer group by using different data communication applications and different terminals,
**characterized in that** system comprises at least two feedback channels (VN), which are independent from each other.

9. The system according to claim 8, **characterized in that** the system used in collecting feedback comprises at least:
- a collector unit (VC) for collecting feedback,
- a manager unit (VM) for processing the feedback data, and
- a determination unit (VP) for determining the raw data,
which units are arranged together or in several locations.

10. The system according to claim 8 or 9, **characterized in that** the collector unit (VC) comprises one feedback channel (VN) for receiving feedback data of the connection.

11. The system according to any of the preceding claims 8 to 10, **characterized in that** the feedback channel (VN) is arranged independent from the channel (DC) used in data distribution.

12. The system according to any of the preceding claims 8 to 11, **characterized in that** as the feedback channel (VN) is arranged to be used a telephone network, a short message service of a mobile station, a feedback channel of a digital television connection, a WAP connection, or an Internet connection.

13. A collector unit (VC) to be used in a system for collecting consumer feedback from a previously undetermined consumer group by using different data communication applications and different terminals, **characterized in that** the collector unit (VC) to be used in the system, which comprises at least two feedback channels (VN), which are independent from each other, comprises at least
- a reception module (M1), which is in connection with the feedback channel (VN) for receiving feedback data,
- a processing unit (M2) for processing the feedback data, and
- a data transfer module (M3) for transferring data further.
